# DEMANDE DE BREVET EUROPEEN

(11) **EP 3 088 789 A1**
(43) Date de publication de la demande: **02.11.2016**
(21) Numéro de dépôt: 15165876.2
(22) Date de dépôt: 30.04.2015
(51) Int. Cl.: F16M 13/00

(54) **SUPPORT PROTECTEUR POUR APPAREIL PORTATIF**

(71) Demandeur: Maillefer Instruments Trading S.a.r.l., 1338 Ballaigues (CH)
(72) Inventeur: PIRAS, Francesco, 1005 Lausanne (CH); KUJAWA,Boris, 1400 Yverdon (CH)
(74) Mandataire: Micheli & Cie SA

(57) **Abrégé**

L'invention concerne un support protecteur (6, 7) pour un appareil portatif (5) tel qu'une tablette numérique. L'appareil portatif (5) comprend une face avant (17) et une face arrière (16), la face avant (17) comprenant une interface utilisateur. Le support protecteur comprend : une coque de protection (6) destinée à contenir l'appareil portatif (5) et comprenant une face avant (19) et une face arrière (18), la face avant (19) comprenant une partie transparente permettant l'utilisation de l'interface utilisateur ; et un élément d'appui (7) fixé magnétiquement à la face arrière (18) de la coque de protection (6).

## Description

La présente invention concerne un support protecteur pour un appareil portatif tel qu'une tablette numérique.

La présente invention vise à fournir un tel support protecteur qui soit adapté au domaine médical, c'est-à-dire notamment qui puisse constituer une barrière hygiénique entre l'appareil portatif et le milieu dans lequel il est placé et qui facilite la manipulation et le positionnement de l'appareil portatif.

A cette fin, la présente invention propose un support protecteur pour appareil portatif, l'appareil portatif comprenant une face avant et une face arrière, la face avant comprenant une interface utilisateur, le support protecteur comprenant :
- une coque de protection destinée à contenir l'appareil portatif et comprenant une face avant et une face arrière, la face avant comprenant une partie transparente permettant l'utilisation de l'interface utilisateur, et
- un élément d'appui fixé magnétiquement à la face arrière de la coque de protection.

De préférence, l'élément d'appui peut occuper différentes positions sur la face arrière de la coque de protection.

La coque de protection peut comprendre une première partie de coque et une deuxième partie de coque assemblées l'une à l'autre de manière détachable et définissant respectivement la face arrière et la face avant de la coque de protection.

Typiquement, la première partie de coque et la deuxième partie de coque sont assemblées l'une à l'autre mécaniquement, par exemple par emboîtage élastique.

Dans un exemple de réalisation, la coque de protection est adaptée pour contenir une tablette numérique constituant ledit appareil portatif.

De préférence, l'élément d'appui comprend une cavité dans laquelle peut être logé un objet.

L'élément d'appui peut aussi comprendre un couvercle pour fermer la cavité.

Le couvercle peut comprendre un logement destiné à recevoir ledit objet et au moins un élément de serrage élastique pour maintenir ledit objet dans le logement.

La cavité peut être adaptée pour loger une pièce à main endodontique constituant ledit objet.

De préférence, le support protecteur selon l'invention est réalisé en matière plastique.

La présente invention propose également une utilisation du support protecteur tel que défini ci-dessus dans le domaine médical, plus particulièrement dans le domaine de l'endodontie.

D'autres caractéristiques et avantages de la présente invention apparaîtront à la lecture de la description détaillée suivante d'un mode de réalisation préféré de l'invention faite en référence aux dessins annexés dans lesquels :
- la figure 1 montre un système endodontique ;
- la figure 2 est une vue en perspective éclatée d'une coque de protection faisant partie d'un support protecteur selon l'invention et contenant un appareil portatif de type tablette numérique ;
- la figure 3 montre trois positions différentes (a), (b) et (c) du support protecteur selon l'invention ;
- la figure 4 est une vue de face du support protecteur selon l'invention ;
- la figure 5 est une vue en perspective d'une partie d'un élément d'appui du support protecteur selon l'invention ;
- la figure 6 est une vue en perspective d'une autre partie de l'élément d'appui ;
- la figure 7 est une vue en perspective de l'élément d'appui logeant une pièce à main endodontique, avec ses deux parties non encore assemblées ;
- la figure 8 est une vue en perspective de l'élément d'appui avec ses deux parties assemblées.

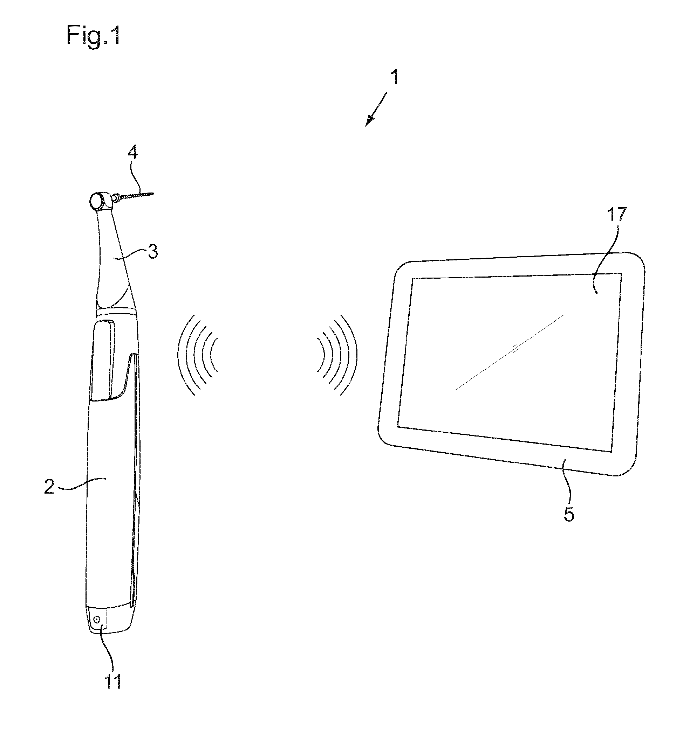

La figure 1 montre un système endodontique 1 comprenant une pièce à main sans fil 2 à laquelle peut être connecté un contre-angle 3 apte à recevoir lui-même un instrument endodontique 4, typiquement une lime rotative. La pièce à main 2 contient un moteur (non représenté) qui actionne l'instrument endodontique 4. Le système 1 comprend aussi une unité de calcul et d'affichage 5 se présentant sous la forme d'un appareil électronique portatif, typiquement une tablette numérique tactile telle qu'un iPad®. La pièce à main 2 et l'appareil portatif 5 communiquent l'un avec l'autre par une liaison sans fil. L'appareil portatif 5 peut ainsi notamment paramétrer le moteur de la pièce à main 2 et afficher des données de mesure produites par un ou plusieurs capteurs que comporte la pièce à main 2.

L'utilisation de l'appareil portatif 5 dans un tel domaine médical peut poser des problèmes d'hygiène. En effet, les appareils électroniques portatifs ne sont pas adaptés pour être nettoyés et désinfectés. De plus, il est important que l'appareil portatif 5 puisse être facilement manipulé et positionné pour le confort du praticien.

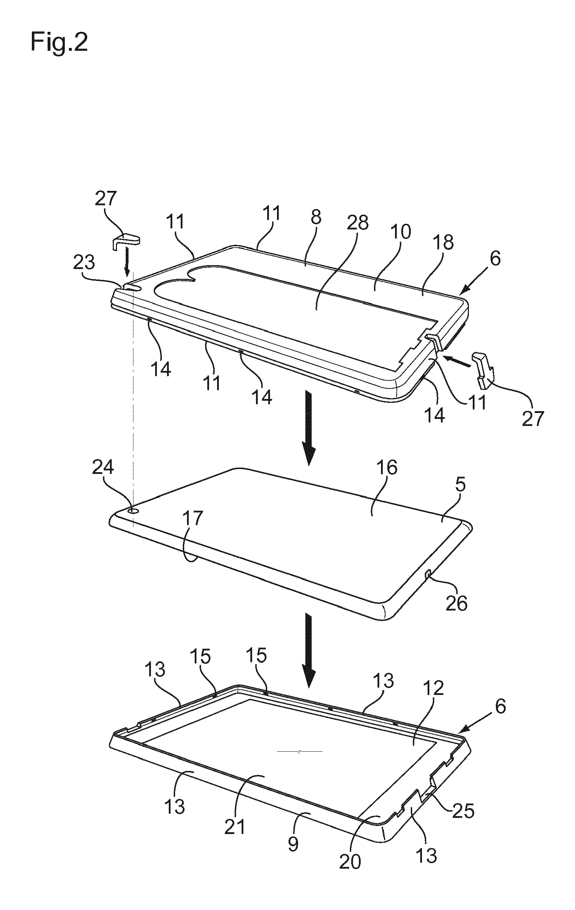

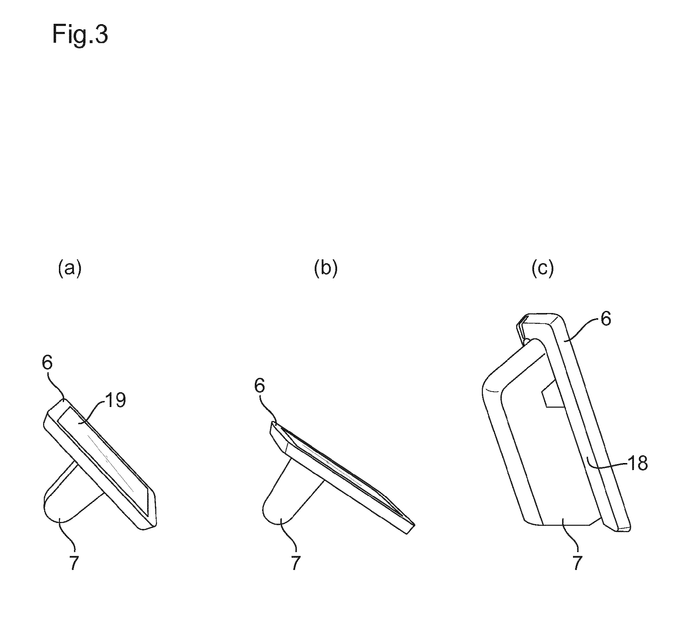

Conformément à l'invention, un support protecteur est prévu pour protéger l'appareil portatif 5. Comme représenté aux figures 2 et 3, ce support protecteur comprend une coque de protection 6 et un élément d'appui 7, réalisés de préférence en matière plastique. La coque de protection 6 est en deux parties 8, 9. La partie de coque 8 comprend une paroi principale plane 10 entourée par des parois latérales 11, les parois 10, 11 définissant ensemble un premier demi-logement. La partie de coque 9 comprend une paroi principale plane 12 entourée par des parois latérales 13, les parois 12, 13 définissant ensemble un deuxième demi-logement. L'appareil portatif 5 peut être placé dans le demi-logement de l'une des parties de coque 8, 9 puis l'autre partie de coque peut être assemblée à la première pour enfermer l'appareil portatif 5 dans la coque de protection 6 ainsi formée. Les parties de coque 8, 9 s'assemblent par emboîtage élastique réversible. A cet effet, les parois latérales 11 ou 13 de l'une des parties de coque 8, 9 comprennent des ergots 14 qui s'engagent dans des entailles 15 prévues dans les parois latérales 13 ou 11 de l'autre partie de coque, les parois latérales 11, 13 pouvant se déformer élastiquement pendant l'assemblage. Toutefois, d'autres modes d'assemblage pourraient être utilisés.

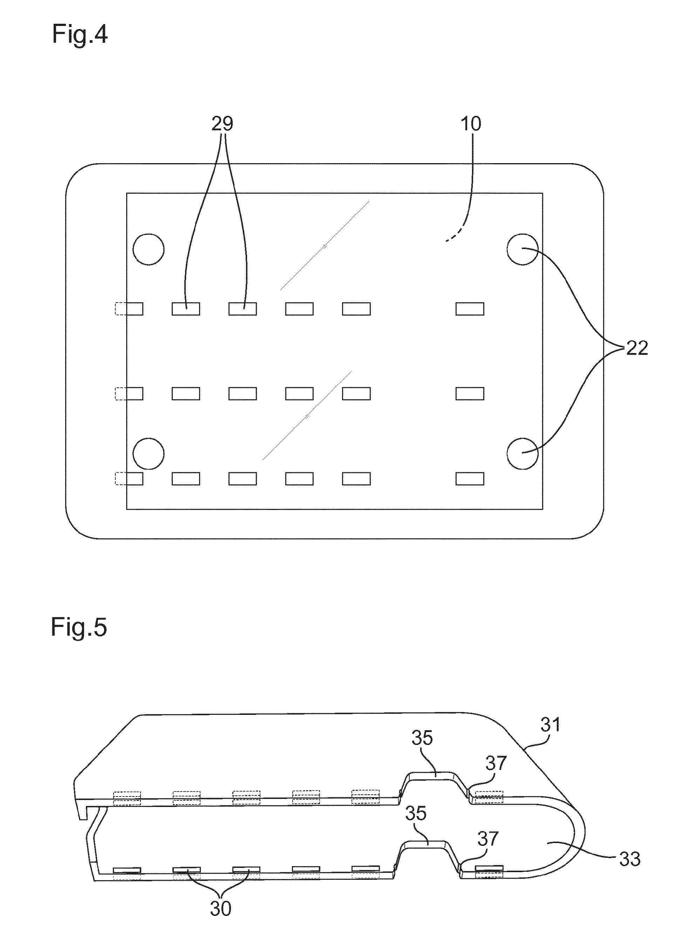

L'appareil portatif 5 est placé dans la coque de protection 6 de telle manière que sa face arrière, désignée par le repère 16, soit en regard de la paroi principale 10 de la partie de coque 8 et que sa face avant 17, qui comporte l'interface utilisateur (typiquement un écran tactile), soit en regard de la paroi principale 12 de la partie de coque 9. Ainsi, la paroi principale 10 de la partie de coque 8 définit la face arrière 18 de la coque de protection 6 tandis que la paroi principale 12 de la partie de coque 9 définit la face avant 19 de la coque de protection 6. La paroi principale 12 comporte un cadre 20 en une pièce avec les parois latérales 13 et une plaque transparente 21 qui couvre le cadre 20 et ferme son ouverture en laissant apparaître l'interface utilisateur de l'appareil portatif 5. La plaque transparente 21 est légèrement souple et faite en une matière plastique. Elle est fixée au cadre 20 par collage, par exemple. L'épaisseur du logement à l'intérieur de la coque de protection 6 correspond sensiblement à celle de l'appareil portatif 5, de sorte que la plaque transparente 21 est en contact avec l'interface utilisateur et permet ainsi une utilisation de ladite interface en transmettant à celle-ci toutes les pressions exercées par le doigt de l'utilisateur sur la plaque transparente 21. Des éléments 22 en matière élastique (cf. figure 4), telle qu'une matière de type mousse, peuvent être fixés, par exemple collés, à la face intérieure de la paroi principale 10 de la partie de coque 8. Ces éléments 22 servent d'appui à la face arrière 16 de l'appareil portatif 5 et pressent l'appareil portatif 5 contre la plaque transparente 21 pour maintenir le contact entre cette dernière et l'interface utilisateur.

La coque de protection 6 couvre ainsi entièrement l'appareil portatif 5 pour constituer une barrière hygiénique. La coque de protection 6 peut en effet être nettoyée et désinfectée tandis que l'appareil portatif 5 est à l'intérieur. La coque de protection 6 peut néanmoins comporter un ou plusieurs trous faisant communiquer l'intérieur de la coque de protection 6 avec l'extérieur, tels qu'un trou 23 situé en regard d'une caméra 24 de l'appareil portatif 5 et un trou 25 situé en regard du port de rechargement et de transmission de données 26 de l'appareil portatif 5. Ces trous permettent une utilisation de toutes les fonctionnalités de l'appareil portatif 5, y compris son rechargement et la prise de photos ou de films, sans avoir à sortir l'appareil portatif 5 de la coque de protection 6. Ces trous peuvent être fermés par des pièces rapportées amovibles 27.

Comme montré à la figure 3, l'élément d'appui 7 du support protecteur selon l'invention est fixé magnétiquement, donc de manière amovible, sur la face arrière 18 de la coque de protection 6 en faisant un angle de sensiblement 90° avec cette face arrière 18. De la sorte, le support protecteur contenant l'appareil portatif 5 peut être posé sur une surface horizontale, dans une position où l'appareil portatif 5 est incliné, ce qui facilite la lecture des données affichées sur l'interface utilisateur par le praticien pendant un traitement endodontique. Lorsqu'une utilisation plus classique de l'appareil portatif 5 est souhaitée, l'élément d'appui 7 peut être facilement détaché de la coque de protection 6 en vainquant la force magnétique qui le maintient contre la face arrière 18 de la coque de protection 6.

Avantageusement, l'élément d'appui 7 peut occuper différentes positions sur la face arrière 18 de la coque de protection 6 pour permettre par exemple de faire varier l'angle d'inclinaison de l'appareil portatif 5 par rapport à une surface d'appui horizontale (cf. figures 3(a) et 3(b)). Comme montré à la figure 2, la face arrière 18 de la coque de protection 6 peut présenter à cette fin une empreinte double 28 correspondant à deux positions discrètes de l'élément d'appui 7. L'élément d'appui 7 peut aussi permettre à la fois un positionnement de l'appareil portatif 5 en configuration « paysage » (figures 3(a) et 3(b)) et un positionnement de l'appareil portatif 5 en configuration « portrait » (figure 3(c)).

Pour la fixation de l'élément d'appui 7, la paroi principale 10 de la partie de coque 8 porte des aimants permanents 29 agencés pour attirer des aimants permanents 30 portés par l'élément d'appui 7 (cf. figures 4 et 5). Le nombre et l'agencement des aimants 29 portés par la paroi 10 sont tels à autoriser les différentes positions précitées de l'élément d'appui 7 sur la face arrière 18 de la coque de protection 6.

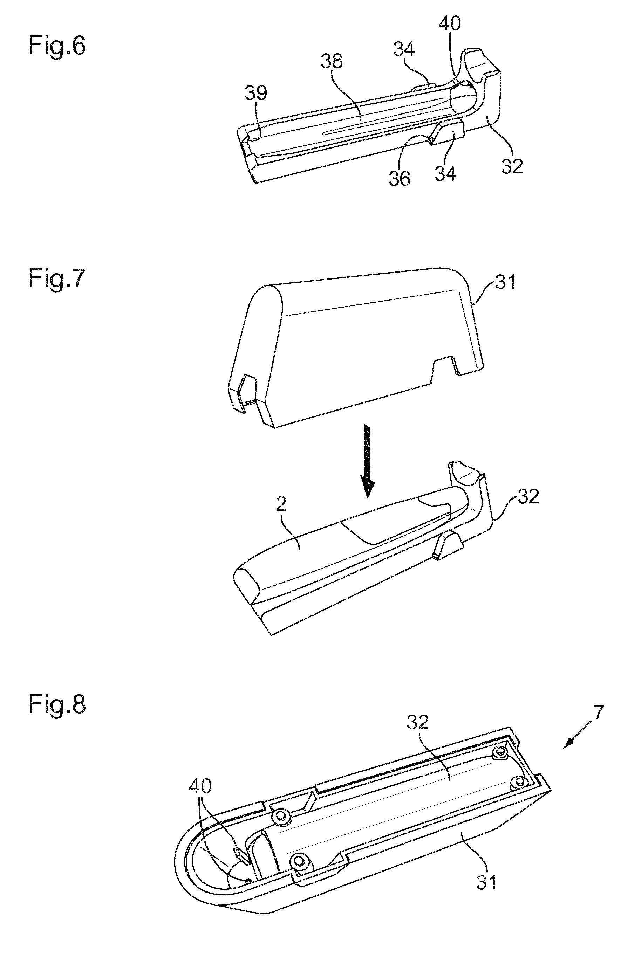

Selon une autre caractéristique avantageuse de l'invention, illustrée aux figures 5 à 8, l'élément d'appui 7 constitue une boîte dans laquelle peut être placée la pièce à main 2 lorsque cette dernière n'est pas utilisée. L'élément d'appui 7 comprend deux parties s'emboîtant élastiquement, à savoir une partie principale creuse 31 et un couvercle 32 fermant la cavité 33 de la partie principale creuse 31. Pour son emboîtement dans la partie principale creuse 31, le couvercle 32 comprend des protubérances latérales de guidage 34 coopérant avec des évidements latéraux de guidage 35 de la partie principale creuse 31 et, sur ces protubérances latérales 34, des ergots ou entailles 36 qui coopèrent respectivement avec des entailles ou ergots 37 formés sur la paroi des évidements latéraux 35 pour maintenir l'assemblage des parties 31, 32. Le couvercle 32 définit un logement 38 adapté pour recevoir et maintenir la pièce à main 2. Dans l'exemple illustré, la pièce à main 2 peut être maintenue dans le logement 38 par serrage élastique entre une paroi d'extrémité 39 du logement 38 et des pattes élastiques 40. Lorsque la partie principale creuse 31 et le couvercle 32 sont assemblés, la pièce à main 2 placée dans le logement 38 est enfermée dans la cavité 33 et ainsi protégée par l'élément d'appui 7. L'élément d'appui 7 peut contenir la pièce à main 2 tout en remplissant sa fonction de maintien en position inclinée de la coque de protection 6 telle qu'illustrée à la figure 3.

La surface extérieure du support protecteur selon l'invention peut être recouverte d'un vernis antidérapant pour limiter les risques de chute.

Il va de soi que la présente invention pourrait s'appliquer à d'autres domaines que l'endodontie, en particulier à d'autres domaines médicaux.

## Revendications

1. Support protecteur pour appareil portatif, l'appareil portatif (5) comprenant une face avant (17) et une face arrière (16), la face avant (17) comprenant une interface utilisateur, le support protecteur comprenant :
- une coque de protection (6) destinée à contenir l'appareil portatif (5) et comprenant une face avant (19) et une face arrière (18), la face avant (19) comprenant une partie transparente permettant l'utilisation de l'interface utilisateur, et
- un élément d'appui (7) fixé magnétiquement à la face arrière (18) de la coque de protection (6).

2. Support protecteur selon la revendication 1, dans lequel l'élément d'appui (7) peut occuper différentes positions sur la face arrière (18) de la coque de protection (6).

3. Support protecteur selon la revendication 1 ou 2, dans lequel la coque de protection (6) comprend une première partie de coque (8) et une deuxième partie de coque (9) assemblées l'une à l'autre de manière détachable et définissant respectivement la face arrière (18) et la face avant (19) de la coque de protection (6).

4. Support protecteur selon la revendication 3, dans lequel la première partie de coque (8) et la deuxième partie de coque (9) sont assemblées l'une à l'autre mécaniquement.

5. Support protecteur selon la revendication 4, dans lequel la première partie de coque (8) et la deuxième partie de coque (9) sont assemblées l'une à l'autre par emboîtage élastique.

6. Support protecteur selon l'une quelconque des revendications 1 à 5, dans lequel la coque de protection (6) est adaptée pour contenir une tablette numérique constituant ledit appareil portatif (5).

7. Support protecteur selon l'une quelconque des revendications 1 à 6, dans lequel l'élément d'appui (7) comprend une cavité (33) dans laquelle peut être logé un objet (2).

8. Support protecteur selon la revendication 7, dans lequel l'élément d'appui (7) comprend un couvercle (32) pour fermer la cavité (33).

9. Support protecteur selon la revendication 8, dans lequel le couvercle (32) comprend un logement (38) destiné à recevoir ledit objet (2) et au moins un élément de serrage élastique (40) pour maintenir ledit objet (2) dans le logement (38).

10. support protecteur selon l'une quelconque des revendications 7 à 9, dans lequel la cavité (33) est adaptée pour loger une pièce à main endodontique constituant ledit objet (2).

11. Support protecteur selon l'une quelconque des revendications 1 à 10, réalisé en matière plastique.

12. Utilisation du support protecteur selon l'une quelconque des revendications 1 à 11 dans le domaine médical.

13. Utilisation du support protecteur selon l'une quelconque des revendications 1 à 11 dans le domaine de l'endodontie.
